# EUROPÄISCHE PATENTSCHRIFT

(11) **EP 0 908 354 B1**
(45) Veröffentlichungstag und Bekanntmachung des Hinweises auf die Patenterteilung: **16.03.2005**
(21) Anmeldenummer: 98117468.3
(22) Anmeldetag: 15.09.1998
(51) Int. Cl.: B60R 16/02

(54) **Drahtlose Übertragungsvorrichtung**
Wireless transmission device
Dispositif de transmission sans fil

(30) Priorität: 16.09.1997 DE 19740732
(43) Veröffentlichungstag der Anmeldung: 14.04.1999
(73) Patentinhaber: TAKATA-PETRI (Ulm) GmbH, 89081 Ulm (DE)
(72) Erfinder: Kopetzky, Robert, 89143 Lonsee (DE); Steidle, Thomas, 89073 Ulm (DE)
(74) Vertreter: Maikowski, Michael, Dipl.-Ing. Dr.

(56) Entgegenhaltungen:
- EP-A- 0 827 871
- WO-A-99/06244
- DE-A- 19 545 220

## Beschreibung

Die vorliegende Erfindung bezieht sich auf eine Vorrichtung zum Übertragen von Signalen und/oder Energie an elektrische Einrichtungen, die an einem Fahrzeugsitz montiert sind. Eine derartige Vorrichtung mit den Merkmalen des Oberbegriffes des Anspruchs 1 ist aus der DE-A-19 545 220 bekannt.

Im modernen Kraftfahrzeugen besitzen Fahrzeugsitze mit sitzintegrierten Sicherheitseinrichtungen, wie beispielsweise Strafferaggregaten und/oder Seitenairbags, üblicherweise eine Steckverbindung, die zur Übertragung von Zünd- oder Diagnosesignalen der Sicherheitseinrichtungen eine Verbindung zwischen dem Fahrzeugkabelbaum und dem Kabelbaum des Fahrzeugsitzes herstellt. Hierdurch werden die Sicherheitseinrichtungen elektrisch und galvanisch mit der Fahrzeugelektrik bzw. -elektronik verbunden. Auch wird die Stromversorgung von Komforteinrichtungen, wie beispielsweise einer elektrischen Sitzverstellung oder Sitzheizung, über eine solche Steckverbindung mit elektrischer Energie versorgt.

In Fahrzeugen mit leicht entnehmbaren Fahrzeugsitzen, beispielsweise Kombifahrzeugen oder Transportern, entsteht das Problem, daß diese nicht ohne weiteres mit sitzintegrierten Sicherheitseinrichtungen ausgestattet werden können, da in diesem Fall dem Benutzer des Fahrzeuges zugemutet werden müßte, die vorhandenen elektrischen Steckverbindungen zu lösen bzw. erneut zu stecken, was unerwünscht ist.

Es ist deshalb das der vorliegenden Erfindung zugrundeliegende Problem (Aufgabe), eine Vorrichtung zu schaffen, die einen zuverlässigen Betrieb von elektrischen Einrichtungen eines Fahrzeugsitzes gewährleistet und die von dem Benutzer des Fahrzeuges leicht ein- und ausgebaut werden kann.

Die Lösung dieser Aufgabe erfolgt durch die Merkmale des Anspruchs 1 und dem Verfahren nach Anspruch 9.

Die drahtlose Übertragungsstrecke ist im Gegensatz zu herkömmlichen Steckverbindungen unempfindlich gegen Schmutz, Feuchtigkeit und mechanische Beschädigung. Bei ausgebautem Fahrzeugsitz befinden sich keine Kabel oder Sicherheitsaggregate auf der Transportfläche des Fahrzeugs, wodurch die Beladung des Fahrzeugs erleichtert und eine Beschädigung des Fahrzeugs oder deren Sicherheitseinrichtungen vermieden ist. Darüber hinaus läßt sich die erfindungsgemäße Vorrichtung dazu nutzen, einen nicht korrekt verrasteten Fahrzeugsitz zu detektieren, wodurch eine hierfür ansonsten erforderliche zusätzliche Überwachungseinheit vermieden ist. Schließlich ist die drahtlose Überwachungsvorrichtung verschleißfrei und damit langlebig.

Vorteilhafte Ausführungsformen der Erfindung sind den abhängigen Ansprüchen beschrieben.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht einer Übertragungsvorrichtung, die im Bereich eines Gurtschlosses eines Fahrzeugsitzes angeordnet ist; und
- Fig. 2: ein elektrisches Blockdiagramm der Übertragungsvorrichtung von Fig. 1.

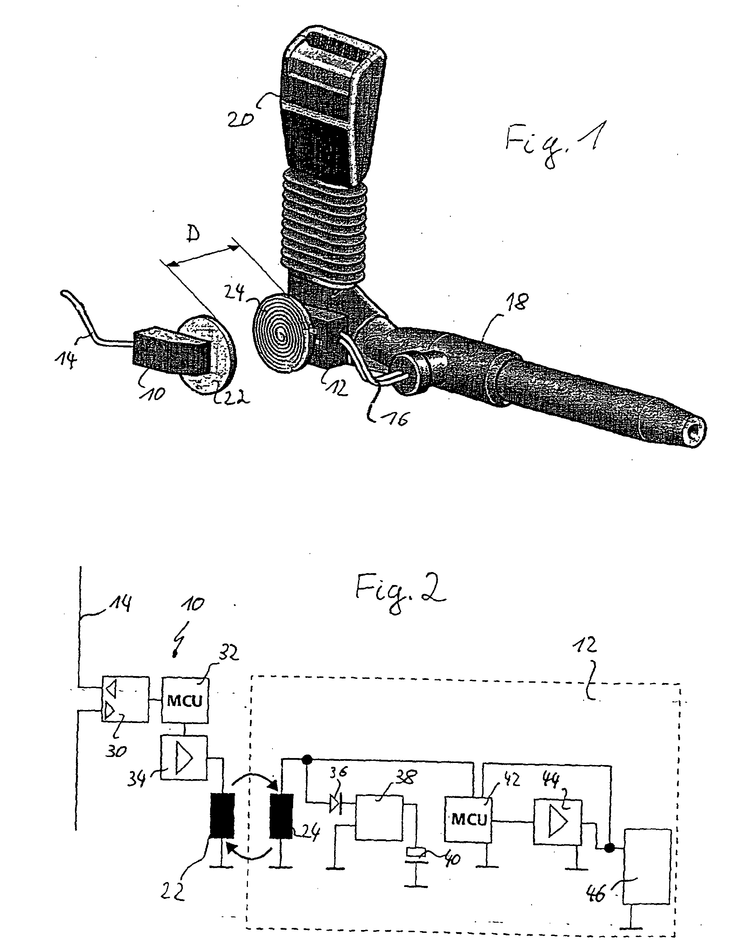

Die in Fig. 1 dargestellte Vorrichtung zum Übertragen von Signalen und Energie an elektrische Einrichtungen weist ein fahrzeugseitiges Übertragungsmodul 10 auf, das mit einem sitzseitigen Übertragungsmodul 12 eine drahtlose Übertragungsstrecke bildet. Das fahrzeugseitige Übertragungsmodul 10 steht über eine Leitungsverbindung 14 (Datenbus) mit einer (nicht dargestellten) Überwachungseinheit des Fahrzeugs in Verbindung und ist im Boden oder in einer Seitenverkleidung des Fahrzeugs integriert. Das sitzseitige Übertragungsmodul 12 ist über eine Leitungsverbindung 16 mit einer elektrischen Einrichtung des Fahrzeugsitzes, im vorliegenden Ausführungsbeispiel einem Gurtstraffer 18 elektrisch verbunden, der im Falle eines Unfalls ein Gurtschloß 20 ruckartig anzieht.

Beide Übertragungsmodule 10 und 12 sind in dem dargestellten Ausführungsbeispiel mit HF-Spulenantennen 22, 24 versehen, die einander gegenüberliegend angeordnet sind und bei ordnungsgemäß eingeriegeltem Fahrzeugsitz einen Abstand D voneinander aufweisen.

Der Fahrzeugsitz, an dem das sitzseitige Übertragungsmodul 12 befestigt ist, ist so gestaltet, daß er zusammen mit seiner Laufschiene aus dem Fahrzeug entnehmbar ist. Die Laufschiene kann mit einer Schnellbefestigung an einem definierten Punkt des Fahrzeugbodens befestigt werden. Das sitzseitige Übertragungsmodul 12 kann dabei an der Laufschiene montiert werden, wobei die Antenne 24 alternativ zu der in Fig. 1 dargestellten Ausführungsform auch zum Fahrzeugboden weisen kann. In diesem Fall befindet sich an der gleichen Position im Fahrzeugboden das fahrzeugseitige Übertragungsmodul 10, wodurch sich bei korrektem Einrasten des Sitzes beide Übertragungsmodule 10, 12 in einem definierten Abstand D voneinander befinden.

Fig. 2 zeigt ein Schaltdiagramm der Übertragungsmodule 10 und 12 von Fig. 1. In dem fahrzeugseitigen Übertragungsmodul 10 ist ein Bus-Interface 30 vorgesehen, das über die Leitungsverbindung 14 (Bus) eine Verbindung zu einer übergeordneten Überwachungseinheit des Fahrzeuges herstellt. Das Bus-Interface 30 steht mit einem Microcontroller 32 (MCU) in Verbindung, der einen Antennentreiber 34 ansteuert. Der Antennentreiber 34 ist mit der Antenne 22 des fahrzeugseitigen Übertragungsmoduls 10 verbunden.

In dem sitzseitigen Übertragungsmodul 12 ist die HF-Antenne 24 über eine Gleichrichterdiode 36 mit einer Energieüberwachungseinheit 38 (Power Management) verbunden, die wiederum einen Energiespeicher 40 in Form eines Kondensators ansteuert. Gleichzeitig steht die Antenne 24 mit einem Microcontroller (MCU) 42 in Verbindung, der mit einem Treiber 44 für eine Zündeinrichtung 46 und auch unmittelbar mit der Zündeinrichtung 46 in Verbindung steht.

Die Übertragung von Informationssignalen erfolgt zwischen den beiden Übertragungsmodulen 10 und 12 physikalisch über dieselbe Übertragungsstrecke. Die Information wird mittels geeigneter Elementarsignale auf ein Trägersignal aufmoduliert und empfängerseitig mittels eines geeigneten Codierers/Decodierers, der in den Microcontrollern 32, 42 integriert ist, decodiert. Das sitzseitige Übertragungsmodul 12 besitzt ebenfalls eine Sendeeinrichtung, um den korrekten Empfang von Signalen quittieren zu können und bei Empfang fehlerhafter Signale die Übertragung erneut anzufordern. Die Modulationssignale des fahrzeugseitigen Übertragungsmodules 10 sind orthogonal zu den Modulationssignalen des sitzseitigen Übertragungsmodules 12, die dieses zur Quittierung von Sendekommandos aussendet. Dadurch ist ein Duplexbetrieb möglich.

Bei einer Inbetriebnahme des Fahrzeugs ist das sitzseitige Übertragungsmodul 12 zunächst energiefrei, d.h. der Energiespeicher 40 ist nicht geladen. Deshalb sendet das fahrzeugseitige Übertragungsmodul 10 zunächst ein unmoduliertes Trägersignal aus, um den Energiespeicher 40 des sitzseitigen Übertragungsmodules aufzuladen, woraufhin das Übertragungsmodul 12 mit Hilfe eines Quittierungssignales seine Funktionsbereitschaft meldet. Erfolgt das Quittierungssignal nicht innerhalb einer bestimmten Zeit, so meldet der Microcontroller 32 einen Fehler an die übergeordnete Überwachungseinheit.

Nach erfolger Quittierung fragt der Microcontroller 32 des fahrzeugseitigen Übertragungsmodules sequentiell verschiedene Diagnosestellen ab, beispielsweise den elektrischen Widerstand der Zündeinrichtung 46. Verlaufen sämtliche Abfragen positiv, so meldet der Microcontroller 32 seine Funktionsbereitschaft an die übergeordnete Einheit (Crash-Controller).

### Bezugszeichenliste

- 10: fahrzeugseitiges Übertragungsmodul
- 12: sitzseitiges Übertragungsmodul
- 14, 16: Leitungsverbindung
- 18: Gurtstraffer
- 20: Gurschloß
- 22, 24: HF-Antenne
- 30: Bus-Interface
- 32: Microcontroller
- 34: Antennentreiber
- 36: Gleichrichter-Diode
- 38: Energieüberwachungseinrichtung
- 40: Energiespeicher
- 42: Microcontroller
- 44: Treiber
- 46: Zündeinrichtung

- D: Abstand

## Patentansprüche

1. Vorrichtung zum Übertragen von Signalen und/oder Energie an zumindest eine elektrische Einrichtung (18) eines Fahrzeugsitzes mit
- einem sitzseitigen Übertragungsmodul (12), das mit der elektrischen Einrichtung (18) und mit einem fahrzeugseitigen Übertragungsmodul (10) in Verbindung steht,
- wobei das sitzseitige Übertragungsmodul und das fahrzeugseitige Übertragungsmodul (10, 12) zusammen eine drahtlose Übertragungsstrecke bilden,
**dadurch gekennzeichnet, dass**
- das sitzseitige Übertragungsmodul (12) einen Energiespeicher (40) aufweist und außerdem derart ausgestaltet ist, dass es ein Quittierungssignal aussendet, nachdem der Energieinhalt des Energiespeichers nach einem Aufladen durch das fahrzeugseitige Übertragungsmodul (10) einen Schwellwert erreicht hat.

2. Vorrichtung nach Anspruch 1, **dadurch gekennzeichnet, dass** das fahrzeugseitige Übertragungsmodul (10) derart ausgestaltet ist, dass es einen Fehler meldet, wenn das sitzseitige Übertragungsmodul (12) nicht innerhalb einer vorgegebenen Zeit seine Funktionsbereitschaft mittels des Quittierungssignals meldet.

3. Vorrichtung nach zumindest einem der vorstehenden Ansprüche,
**dadurch gekennzeichnet, daß**
die beiden Übertragungsmodule (10, 12) HF-Antennen (22, 24) aufweisen und/oder daß die beiden Übertragungsmodule induktiv gekoppelt sind.

4. Vorrichtung nach zumindest einem der vorstehenden Ansprüche,
**dadurch gekennzeichnet, daß**
das sitzseitige Übertragungsmodul (12) eine Energieüberwachungseinrichtung (38) aufweist, die unabhängig von einer Überwachungseinrichtung des Fahrzeugs arbeitet und/oder daß das sitzseitige Übertragungsmodul (12) im Bodenbereich eines Fahrzeugsitzes befestigt ist, der vorzugsweise mittels eines Schnellverschlusses von dem Fahrzeug lösbar ist und/oder daß das fahrzeugseitige Übertragungsmodul (10) in den Bodenbereich des Fahrzeugs integriert ist.

5. Vorrichtung nach zumindest einem der vorstehenden Ansprüche,
**dadurch gekennzeichnet, daß**
zwischen dem Fahrzeug und dem sitzseitigen Übertragungsmodul (12) keine leitungsgebundene Übertragungsstrecke vorhanden ist.

6. Vorrichtung nach zumindest einem der vorstehenden Ansprüche,
**dadurch gekennzeichnet, daß**
das sitzseitige und/oder das fahrzeugseitige Übertragungsmodul (10, 12) Kennwerte von elektrischen Einrichtungen (18) abfragt, die an dieses angeschlossen sind.

7. Vorrichtung nach zumindest einem der vorstehenden Ansprüche,
**dadurch gekennzeichnet, daß**
das sitzseitige Übertragungsmodul (12) an eine Sicherheitseinrichtung (18) des Fahrzeugsitzes, insbesondere eine Rückhalteeinrichtung und/oder einen Airbag angeschlossen ist und/oder daß das sitzseitige Übertragungsmodul (12) an eine Komforteineinrichtung des Fahrzeugsitzes, insbesondere eine Sitzheizung oder eine Sitzverstellung, angeschlossen ist.

8. Vorrichtung nach zumindest einem der vorstehenden Ansprüche,
**dadurch gekennzeichnet, daß**
die Übertragungsstrecke von dem fahrzeugseitigen und/oder dem sitzseitigen Übertragungsmodul unabhängig von einer Überwachungseinrichtung des Fahrzeuges überwacht wird.

9. Verfahren zum Übertragen von Signalen und/oder Energie an elektrische Einrichtungen (18), die an einem Fahrzeugsitz montiert sind mit einer Vorrichtung nach zumindest einem der vorstehenden Ansprüche,
**gekennzeichnet durch** die folgenden Schritte:
- Aussenden eines unmodulierten Trägersignales an das sitzseitige Übertragungsmodul (12);
- Aufladen eines Energiespeichers (40) des sitzseitigen Übertragungsmodules auf einen vorbestimmten Wert;
- Senden eines Quittierungssignales zu dem fahrzeugseitigen Übertragungsmodul.

10. Verfahren nach Anspruch 9,
**dadurch gekennzeichnet, daß**
als weiterer Schritt Kennwerte von elektrischen Einrichtungen abgefragt werden, die an das sitzseitige Übertragungsmodul angeschlossen sind und/oder daß als weiterer Schritt ein Bereitschaftssignal an eine übergeordnete Steuereinheit gesandt wird.

11. Verfahren nach Anspruch 9 oder 10,
**dadurch gekennzeichnet, daß**
ein Fehlersignal an eine übergeordnete Steuereinheit gesandt wird, wenn das Bereitschaftssignal nicht innerhalb einer vorbestimmten Zeitdauer von dem fahrzeugseitigen Übertragungsmodul empfangen wird.

12. Verwendung einer Vorrichtung nach zumindest einem der vorstehenden Ansprüche 1 bis 8 zum Überwachen der ordnungsgemäßen Befestigung eines Fahrzeugsitzes am Fahrzeug.

## Claims

1. Apparatus for transmitting signals and/or power to at least one electrical device (18) of a vehicle seat, having
- a transmission module (12) at the seat end, which module is connected to the electrical device (18) and to a transmission module (10) at the vehicle end,
- the transmission module (12) at the seat end and the transmission module (10) at the vehicle end together forming a wireless transmission path,
**characterized in that**
- the transmission module (12) at the seat end has an energy store (40) and also is designed such that it outputs an acknowledgement signal once the energy content of the energy store has reached a threshold value after being charged by the transmission module (10) at the vehicle end.

2. Apparatus according to Claim 1, **characterized in that** the transmission module (10) at the vehicle end is designed such that it signals a fault if the transmission module (12) at the seat end does not signal its readiness for operation by means of the acknowledgement signal within a predefined time.

3. Apparatus according to at least one of the preceding claims, **characterized in that** the two transmission modules (10, 12) have RF antennas (22, 24), and/or **in that** the two transmission modules are inductively coupled.

4. Apparatus according to at least one of the preceding claims, **characterized in that** the transmission module (12) at the seat end has an energy-monitoring device (38) which operates independently of a monitoring device of the vehicle, and/or **in that** the transmission module (12) at the seat end is secured in the base region of a vehicle seat which can preferably be released from the vehicle by means of a quick-action closure, and/or **in that** the transmission module (10) at the vehicle end is integrated in the base region of the vehicle.

5. Apparatus according to at least one of the preceding claims, **characterized in that** there is no line-connected transmission path between the vehicle and the transmission module (12) at the seat end.

6. Apparatus according to at least one of the preceding claims, **characterized in that** the transmission module (12) at the seat end and/or the transmission module (10) at the vehicle end interrogates characteristic values of electrical devices (18) which are connected to the said module.

7. Apparatus according to at least one of the preceding claims, **characterized in that** the transmission module (12) at the seat end is connected to a safety device (18) of the vehicle seat, in particular a restraint device and/or an airbag, and/or **in that** the transmission module (12) at the seat end is connected to a comfort device of the vehicle seat, in particular a seat-heating system or a seat-adjusting system.

8. Apparatus according to at least one of the preceding claims, **characterized in that** the transmission path from the transmission module at the vehicle end and/or the transmission module at the seat end is monitored independently of a monitoring device of the vehicle.

9. Method for transmitting signals and/or power to electrical devices (18) which are mounted on a vehicle seat, having an apparatus according to at least one of the preceding claims, **characterized by** the following steps:
- outputting an unmodulated carrier signal to the transmission module (12) at the seat end;
- charging an energy store (40) of the transmission module at the seat end to a predetermined value;
- sending an acknowledgement signal to the transmission module at the vehicle end.

10. Method according to Claim 9, **characterized in that**, as a further step, characteristic values of electrical devices are interrogated, these electrical devices being connected to the transmission module at the seat end, and/or **in that** as a further step, a readiness signal is sent to a superordinate control unit.

11. Method according to Claim 9 or 10, **characterized in that** a fault signal is sent to a superordinate control unit if the readiness signal is not received by the transmission module at the vehicle end within a predetermined period of time.

12. Use of an apparatus according to at least one of the preceding Claims 1 to 8 for monitoring the correct securing of a vehicle seat to the vehicle.

## Revendications

1. Dispositif pour la transmission de signaux et/ou d'énergie vers au moins un équipement électrique (18) d'un siège de véhicule avec
- un module de transmission (12) du côté du siège en liaison avec l'équipement électrique (18) et avec un module de transmission (10) du côté du véhicule,
- le module de transmission du côté du siège et le module de transmission du côté du véhicule (10, 12) formant ensemble une ligne de transmission sans fil,
**caractérisé en ce que**
- le module de transmission (12) du côté du siège possède un accumulateur d'énergie (40) et qu'il est d'autre part arrangé de telle sorte qu'il émette un signal d'accusé de réception lorsque la réserve d'énergie de l'accumulateur d'énergie a atteint une valeur de seuil après une charge par le module de transmission (10) du côté du véhicule.

2. Dispositif selon la revendication 1, **caractérisé en ce que** le module de transmission (10) du côté du véhicule est arrangé de telle sorte qu'il signale une erreur lorsque le module de transmission (12) du côté du siège ne signale pas sa disponibilité fonctionnelle dans un délai prédéfini par l'intermédiaire du signal d'accusé de réception.

3. Dispositif selon une au moins des revendications précédentes, **caractérisé en ce que** les deux modules de transmission (10, 12) possèdent des antennes HF (22, 24) et/ou que les deux modules de transmission sont accouplés par induction.

4. Dispositif selon une au moins des revendications précédentes, **caractérisé en ce que** le module de transmission (12) du côté du siège possède un équipement de surveillance de l'énergie (38) qui fonctionne indépendamment d'un équipement de surveillance du véhicule et/ou que le module de transmission (12) du côté du siège est fixé dans le périmètre du sol d'un siège de véhicule qui peut de préférence être détaché du véhicule grâce à un verrouillage rapide et/ou que le module de transmission (10) du côté du véhicule est intégré dans le périmètre du sol du véhicule.

5. Dispositif selon une au moins des revendications précédentes, **caractérisé en ce qu'**il n'existe pas de ligne de transmission liée à un câble entre le véhicule et le module de transmission (12) du côté du siège.

6. Dispositif selon une au moins des revendications précédentes, **caractérisé en ce que** le module de transmission du côté du siège et/ou du côté du véhicule (10, 12) interroge des valeurs caractéristiques des équipements électriques (18) qui lui sont raccordés.

7. Dispositif selon une au moins des revendications précédentes, **caractérisé en ce que** le module de transmission (12) du côté du siège est raccordé à un équipement de sécurité (18) du siège du véhicule, notamment un équipement de retenue et/ou un coussin gonflable et/ou que le module de transmission (12) du côté du siège est raccordé à un équipement de confort du siège du véhicule, notamment un chauffage du siège ou un réglage du siège.

8. Dispositif selon une au moins des revendications précédentes, **caractérisé en ce que** la ligne de transmission à partir du module de transmission du côté du véhicule et/ou du côté du siège est surveillée indépendamment d'un équipement de surveillance du véhicule.

9. Procédé pour la transmission de signaux et/ou d'énergie vers des équipements électriques (18) montés sur un siège de véhicule avec un dispositif selon une au moins des revendications précédentes,
**caractérisé par** les étapes suivantes :
- émission d'un signal porteur non modulé vers le module de transmission (12) du côté du siège ;
- charge d'un accumulateur d'énergie (40) du module de transmission du côté du siège jusqu'à une valeur prédéfinie ;
- émission d'un signal d'accusé de réception vers le module de transmission du côté du véhicule.

10. Procédé selon la revendication 9,
**caractérisé en ce que** dans une étape suivante, on interroge des valeurs caractéristiques des équipements électriques qui sont raccordés au module de transmission du côté du siège et/ou que dans une étape suivante on émet un signal de disponibilité vers une unité de commande de niveau supérieur.

11. Procédé selon la revendication 9 ou 10,
**caractérisé en ce qu'**on émet un signal d'erreur vers une unité de commande de niveau supérieur lorsque le signal de disponibilité n'est pas reçu dans un délai prédéfini par le module de transmission du côté du véhicule.

12. Utilisation d'un dispositif selon une au moins des revendications précédentes 1 à 8 pour la surveillance de la fixation réglementaire d'un siège de véhicule au véhicule.
